# NEUE EUROPÄISCHE PATENTSCHRIFT

(11) **EP 1 652 161 B2**
(45) Veröffentlichungstag und Bekanntmachung des Hinweises auf die Entscheidung über den Einspruch: **30.06.2010**
(45) Hinweis auf die Patenterteilung: 31.10.2007
(21) Anmeldenummer: 04738894.7
(22) Anmeldetag: 08.07.2004
(51) Int. Cl.: G08G 1/16, B60R 1/00

(54) **VORRICHTUNG ZUR KLASSIFIZIERUNG WENIGSTENS EINES OBJEKTS IN EINEM FAHRZEUGUMFELD**
DEVICE FOR CLASSIFYING AT LEAST ONE OBJECT IN THE VICINITY OF A VEHICLE
DISPOSITIF POUR CLASSIFIER AU MOINS UN OBJET DANS UN ENVIRONNEMENT DE VEHICULE

(30) Priorität: 25.07.2003 DE 10333987; 08.08.2003 DE 10336638
(43) Veröffentlichungstag der Anmeldung: 03.05.2006
(73) Patentinhaber: ROBERT BOSCH GMBH, 70442 Stuttgart (DE)
(72) Erfinder: SIMON, Stephan, 31079 Sibbesse (DE); LINDNER, Sebastian, 30823 Garbsen (DE); VOELZ, Henning, 31141 Hildesheim (DE)
(86) Internationale Anmeldenummer: PCT/DE2004/001478
(87) Internationale Veröffentlichungsnummer: WO 2005/013235

(56) Entgegenhaltungen:
- EP-A- 1 030 188
- US-A- 5 410 346
- US-A1- 2003 114 964
- FRANKE U ET AL: "Real-time stereo vision for urban traffic scene understanding" INTELLIGENT VEHICLES SYMPOSIUM, 2000. IV 2000. PROCEEDINGS OF THE IEEE DEARBORN, MI, USA 3-5 OCT. 2000, PISCATAWAY, NJ, USA,IEEE, US, 3. Oktober 2000 (2000-10-03), Seiten 273-278, XP010528949 ISBN: 0-7803-6363-9

## Beschreibung

### Stand der Technik

Die Erfindung geht aus von einer Vorrichtung zur Klassifizierung wenigstens eines Objekts in einem Fahrzeugumfeld nach der Gattung des unabhängigen Patentanspruchs.

Aus DE 100 25 678 A1 ist ein kamerabasiertes Pre-Crash-Erkennungssystem bekannt. Dabei werden potentielle Unfallgegner in den Bilddaten einer Monobildkamera markiert, anschließend wird deren Entfernung und relative Geschwindigkeit bestimmt, so dass gezielt gefährdende Objekte in Echtzeit einer Typklassifikation unterzogen werden können. Dieses Verfahren identifiziert Regionen innerhalb eines Kamerabildes in welchem sich Verkehrsteilnehmer oder Hindernisse befinden. Die Identifikation erfolgt wie oben dargestellt mit Hilfe eines speziell auf die zu erkennenden Verkehrsteilnehmer und Hindernisse trainierten Klassifikators. Dann werden die entsprechenden identifizierten Regionen markiert und mittels eines entfernungsmessenden Sensors bezüglich ihrer Entfernung vom Beobachter vermessen. Abschließend werden ausgewählte Regionen einer Typklassifikation zur exakten Bestimmung der Art vom Verkehrsteilnehmer oder Hindernis zugeführt.

Aus US 5410346 ist eine stereoskopische Erfassung eines Objekts aus einem Fahrzeug bekannt. Damit kann dann der Abstand zum Fahrzeug bestimmt werden. Aus US 2003/0114964 A1 ist eine Objektklassifizierung bekannt, bei der ein Objekt nach der Höhe und Breite klassifiziert wird. Dazu kann ein Stereo-Kamerasystem verwendet werden. Aus EP 1030188 A ist ein Umgebungs-Erfassungssystem bekannt, bei dem mit stereoskopischer Technik Tiefeninformation erfasst werden kann. Auch eine Geschwindigkeit kann hier verwendet werden. Mittels mehrerer Schablonen kann ein Objekt identifiziert werden, um dann die Richtung des Objekts abschätzen zu können.

### Vorteile der Erfindung

Die erfindungsgemäße Vorrichtung zur Klassifizierung wenigstens eines Objekts in einem Fahrzeugumfeld mit den Merkmalen des unabhängigen Patentanspruchs hat Vorteile, wobei das Objekt zumindest anhand seiner dreidimensionalen Form und seiner Abmessungen klassifiziert wird. Die Umfeldsensorik ist dabei derart konfiguriert, dass sie die Form und die Abmessungen ermitteln kann. Die Form und die Abmessungen sind wichtige Parameter, um potenzielle Unfallgegner eindeutig zu identifizieren. In Abhängigkeit davon können dann Schutzmaßnahmen oder andere Fahrzeugfünktionen aktiviert werden. Diese Aktivierung erfolgt durch die bessere Klassifizierung dann zielgenauer. Die Klassifizierungsergebnisse werden zeitlich gefiltert. Klassen weisen spezifische Eigenschaften auf. Die Eigenschaften beschreiben charakteristische Merkmale der jeweiligen Klasse oder Unterschiede zu anderen Klassen. Die Eigenschaften werden in einer Modelldatenbank organisiert. Es gibt eine Verwerfungsklasse, in die alle Objekte eingeordnet werden, die keinen Eigenschaften der Klassen in der Modelldatenbank entsprechen.

Durch die in den abhängigen Ansprüchen vorgestellten Maßnahmen und Weiterbildungen sind vorteilhafte Verbesserungen dem unabhängigen Patentanspruch angehenden Vorrichtung zur Klassifizierung wenigstens eines Objekts in einem Fahrzeugumfeld mittels einer Umfeldsensorik möglich.

Besonders vorteilhaft ist, dass die Vorrichtung zusätzlich eine Geschwindigkeit des wenigstens eines Objekts bei der Klassifizierung berücksichtigt. Dann kann durch die Zusammenschau von Form, Abmessungen und Geschwindigkeit des Objekts eine eindeutige Identifizierung stattfinden. Anhand von Daten einer Datenbank kann dann anhand dieser Parameter auch eine Plausibilitätsprüfung der Klassifizierung erfolgen, ob die jeweiligen Formen und Abmessungen mit einer jeweiligen Geschwindigkeit ein bekanntes Objekt überhaupt charakterisieren können. Zuzätzlich kann die Klassifizierung durch die Bestimmung der Richtung des Objekts bzw. seiner Orientierung erfolgen. Dies bestimmt die Beurteilung der Abmessungen des Objekts, denn je nach dem welche Orientierung ein Objekt zu einem Beobachter hat, bestimmen sich die sichtbaren Abmessungen des Objekts.

Darüber hinaus ist es vorteilhaft, dass die Vorrichtung mit wenigstens einem Fahrzeugsystem derart gekoppelt ist, dass die Vorrichtung das wenigstens eine Fahrzeugsystem in Abhängigkeit von der Klassifizierung ansteuert. Nunmehr können beispielsweise bei Schutzmaßnahmen, wie dem aktiven Fahreingriff auf solche Klassifizierungen Rücksicht genommen werden, um das Verhalten solcher klassifizierten Objekte bei der Art des Eingriffes zu berücksichtigen.

Das Fahrzeugsystem kann vorteilhafter Weise ein Schutzsystem sein, wie es ESP ein Bremsassistent oder ein Rückhaltesystem ist, wozu beispielsweise auch ein Fußgängerschutz gehören kann. Das Fahrzeugsystem kann aber auch ein Fahrerassistenzsystem sein, wie beispielsweise ein Spurverlassenswarner, wenn anhand der Objektklassifizierung erkannt wird, dass ein Vorgang des Spurverlassens wahrscheinlich ist.

Die Umfeldsensorik weist zur Erfassung der Abmessungen und der dreidimensionalen Form beispielsweise eine Stereokamera auf. Aber auch eine Monokamera mit Bewegungsstereo ist möglich. Weitere Alternativen sind Lidar, abtastende Radarsensoren oder andere stereofähige Sensoren.

### Zeichnung

Ausführungsbeispiel dieser Erfindung sind in der Zeichnung dargestellt und werden in der nachfolgenden Beschreibung näher erläutert.

Es zeigen
Figur 1 ein Blockschaltbild der erfindungsgemäßen Vorrichtung,
Figur 2 ein Flussdiagramm und
Figur 3 ein Beispiel für die Klassifizierung.

### Beschreibung

Derzeitige Seriensysteme zur Umfeldwahrnehmung umfassen beispielsweise Einparkhilfen, die mit Ultraschallsensoren den Abstand zu einem Objekt erkennen und eine Warnung ausgeben, wenn die gemessene Distanz zu gering wird. Weiterhin ist das sogenannte Adaptive-Cruise-Control (ACC) in Serie, das mit Hilfe einer Radartechnologie einer Abstands- und Geschwindigkeitsbestimmung durchführt. Dadurch ist es möglich, die Funktion eines Tempomaten, der die eingestellte Geschwindigkeit konstant hält zu erweitern. Bei der Regelung der eingestellten Geschwindigkeit kann so zusätzlich ein gewünschter Sicherheitsabstand eingehalten werden.

Derzeit sind in der Entwicklung Systeme zur Umfeldwahrnehmung mit Sensoren wie Video, Radar, nahes und fernes Infrarot, Ultraschall, Lidar oder Entfernungsbildkameras sowie eine Kombination dieser Sensoren. Mit Hilfe dieser Systeme sollen Objekte mit höherer Zuverlässigkeit als bisher erkannt werden und neue Anwendungsmöglichkeiten erschlossen werden. Dazu gehört beispielsweise eine Objekterkennung, bei der Positions-, Bewegungs- und Objektabmessungen ermittelt werden oder eine Fahrspurerkennung um zum Beispiel eine Fahrspurverlassenswarnung zu ermöglichen. Solche Systeme werden für den Einsatz in Sicherheits- und Komfortanwendungen entwickelt.

Ein weiteres wichtiges Thema ist die Objektklassifizierung. Eine Klassifizierung ist eine Einteilung der Objekte in vordefinierte Klassen. Mit Hilfe dieser zusätzlichen Informationen über die delektierten Objekte können insbesondere Sicherheits- und Komfortsysteme des Fahrzeugs verbessert werden. Insbesondere in kritischen Situationen wie Unfallszenarien, kann der Einsatz von Sicherheitssystemen durch eine Objektklassifizierung differenzierter und effektiver erfolgen.

Mögliche Anwendungen für eine Klassifizierung von Objekten im Fahrzeugumfeld sind:
Sicherheitsfunktionen:
   - Fahrzeuginsassenschutz
   - Partnerschutz, das ist der Schutz von anderen Verkehrsteilnehmern
   - Verbesserung der Crash-Kompatibilität zwischen Unfallbeteiligten
   - Warnfunktionen
Komfortfunktionen:
   - Erweiterung der ACC-Funktionalität

Für viele zukünftige Sicherheitsfunktionen sind zuverlässige Beschreibungen des Fahrzeugumfelds erforderlich. Eingriffe in die Fahrzeugsteuerung ohne die Ansteuerung von Rückhaltemittel könnten mehr Schaden als Nutzen anrichten, wenn sie fälschlicherweise erfolgen. Daten über relevante Objekte werden in Vorrichtungen wie ACC, beispielsweise aus Radarsensoren gewonnnen und beschränken sich meistens auf geometrische Informationen wie Position und Geschwindigkeit. Nähere Kenntnisse, um welche Art von Objekt es sich handelt, sind nicht vorhanden. Eine detaillierte Beschreibung des Fahrzeugumfelds bzw. eine höhere Zuverlässigkeit der Information ist jedoch notwenig, um bestimmte Fehlauslösungen oder andere Mängel der derzeitigen Systeme zu beseitigen. Wird ein Objekt nicht nur erkannt, sondern auch die Art des Objektes bestimmt, werden verschiedenste Maßnahmen möglich:

Ein wesentliches Anwendungsgebiet der Objektklassifizierung im Fahrzeugumfeld liegt im Partnerschutz. Beispielsweise kann bei der Erkennung eines bevorstehenden

Zusammenstoßes mit einem Fußgänger ein Fußgängerairbag an der Front des Fahrzeugs ausgelöst werden, oder die Motor- bzw. Fronthaube angehoben werden. Damit wird der Aufprall des Fußgängers auf das Fahrzeug gedämpft und der Aufprall auf den direkt unter der Fronthaube befindlichen Motorblock verhindert. Eine Fußgängersensorik arbeitet jedoch meistens mit Kontaktsensoren zur Detektion des Aufpralls. Dabei ist die Gefahr der Fehlauslösung gegeben, denn solch ein Kontaktsensor könnte beispielsweise auch auslösen, wenn das Fahrzeug gegen einen Leitpfosten fährt.

Mit Hilfe einer Objektklassifizierung kann eine solche Fehlauslösung verhindert werden. Dadurch können insbesondere bei der Ansteuerung nicht reversibler Rückhaltesysteme wie z.B. Airbags, Reparaturkosten eingespart werden.

Durch den Einsatz einer Objektklassifizierung ist weiterhin die Auslösung eines solchen Systems vorausschauend möglich. Durch das frühzeitige Erkennen des anstehenden Fußgängerzusammenstoßes wird eine Ansteuerung des Airbags ohne die Notwendigkeit der Erfassung durch den Kontaktsensor möglich. Die Auslöseentscheidung auf Basis des Kontaktsensors kann durch das Ergebnis des Klassifizierungssystems sicherer getroffen werden. Somit kann die Robustheit des Systems erhöht werden, oder es könnten sogar Kontaktsensoren eingespart werden.

Insbesondere bei den sogenannten Sport-Utility-Vehicles (SUV) ist die Gefährdung bei einem Zusammenstoß für kleinere Fahrzeuge aufgrund der erhöhten Front des SUVs wesentlich größer, als wenn beide Frontpartien auf gleicher Höhe wären. Wird mit Hilfe einer Objektklassifizierung ein bevorstehender Zusammenstoß zwischen einem Kleinwagen und einem SUV, der mit einem Klassifizierungssystem ausgestattet ist, erkannt, so kann dessen Frontpartie z. B. mit Hilfe einer Luftfederung abgesenkt werden. Bei einem Zusammenstoß mit einem anderen SUV oder einem anderen Fahrzeug einer ähnlichen Größenklasse würde diese Absenkung nicht erfolgen. So kann mit Hilfe einer Klassifizierung sichergestellt werden, dass immer die größtmögliche Crash-Kompatibilität hergestellt wird. Damit wird eine Milderung der Unfallschwere erzielt. Eine alternative Anpassung der Crash-Kompatibilität kann nur aufgrund geometrischer Objektdaten erfolgen, wie der Höhe des Unfallbeteiligten. Dies wäre jedoch nicht zuverlässig genug, da beispielsweise ein Fahrradfahrer die gleiche Höhe wie ein SUV haben kann. Die beschriebene Maßnahme wird nur durch eine zuverlässige Klassifizierung ermöglicht.

Der Einsatz einer Klassifizierung von Objekten in der Umfeldwahrnehmung kann für Funktionen wie eine automatische Notbremsung oder ein automatisches Ausweichmanöver sehr nützlich sein. Hierbei ist es von Vorteil, wenn zwischen schützenswerten Objekten, wie Verkehrsteilnehmern und weniger schützenswerten Objekten, wie einem Leitpfosten oder Leitplanken, unterschieden werden kann. Wird ein bevorstehender unvermeidbarer Zusammenstoß mit einem Fußgänger erkannt, sollte eine Notbremsung durchgeführt werden. Ist das erkannte Objekt beispielsweise ein Leitpfosten oder ein kleiner Baum, so kann der Schaden, der durch eine Notbremsung oder ein Ausweichmanöver entsteht, beispielsweise die Gefährdung des nachfolgenden Verkehrs, höher als der Nutzen sein. Solche ungewollten Auslösungen des in die Fahrdynamik eingreifenden Systems bei nicht schützenswerten Objekten können nur mit Hilfe einer Klassifizierung verhindert werden.

Weiterhin kann bei der Berechnung eines Ausweichmanövers unter der Kenntnis der Objektklassifizierung ein wahrscheinliches Verhalten des zu umfahrenden Objekts berücksichtigt werden. Beispielsweise kann ein Fußgänger schneller als ein Fahrzeug eine 180° Kehrtwende durchführen. Ein Fußgänger kann aber nicht so schnell in gleichbleibender Richtung beschleunigen, so dass die Kenntnis über die Objektklassifizierung notwendig für eine zuverlässige Bestimmung eines Ausweichkurses ist.

Eine zusätzliche Möglichkeit der Klassifizierung ist die Verwendung zur Prüfung der Objekteingangsdaten auf ihre Plausibilität. Aufgrund von Messfehlern kann es beispielsweise vorkommen, dass ein 1,65m breites Fahrzeug mit einer zu geringen gemessenen Breite von nur Im vermessen wird. Kraftfahrzeuge dieser Breite gibt es derzeit nicht, so dass das Ergebnis demnach unplausibel wäre. Erfolgt trotzdem eine Klassifizierung des Fahrzeugs als kleiner PKW, so kann eine Plausibilitätsüberprüfung der Breite erfolgen. Durch die Klassifizierung ist eine Korrektur der Objektbreite auf diejenige der Klasse kleiner PKWs möglich. Systeme wie z. B. das automatische Ausweichen, würden eventuell bei einem Objekt mit einer Breite von 1m keine Aktionen durchführen, obwohl es notwendig wäre. Anhand des Klassifizierungsergebnisses würden in diesem Beispiel die gewünschte Aktion dennoch eingeleitet werden.

Die Breite bezeichnet hier den wirklichen Wert. Da die Orientierung des Objekts bekannt ist, kann die Breite jederzeit aus der Messung abgeleitet werden. Damit erhält man dann die wirkliche Breite des Objekts.

Mit einer Objektklassifizierung können auch Warnsysteme, wie beispielsweise ein Fahrspurverlassenswarner, unterstützt werden. Bei solchen Systemen wird die Fahrspur, in der sich das eigene Fahrzeug befindet, erkannt. Verlässt das Fahrzeug diese Fahrspur, beispielsweise durch langsamen Abdriften des Fahrzeugs aufgrund von Ermüdungserscheinungen des Fahrers, so wird eine Warnung ausgegeben. Ein solches System kann von einer Objektklassifizierung unterstützt werden. Sind die Fahrbahnrandmarkierungen aufgrund von Schnee, Regen, Schmutz oder Alterung nicht eindeutig zu erkennen, aber es werden Leitpfosten oder Leitplanken am Rand der Fahrbahn klassifiziert, so können diese unterstützend zu einer Schätzung des Fahrspurverlaufs verwendet werden.

Durch die Auswertung der Klassifizierung können Systeme an die aktuelle Umgebungssituation angepasst werden. Ein Fußgänger auf der Straße kann ein Hinweis dafür sein, dass noch weitere Fußgänger zu erwarten sind. In dieser Situation ist eine erhöhte Aufmerksamkeit erforderlich.

Durch Komfortfunktionen kann der Fahrzeugführer entlastet werden, so dass ein entspannteres und somit sicheres Fahren möglich ist. Mit der Kenntnis über die Klasse eines vorausfahrenden Objekts, können bei einem erweiterten ACC die Regelparameter automatisch angepasst werden. Beispielsweise kann das unterschiedliche Beschleunigungs- bzw. Abbremsvermögen des vorausfahrenden Fahrzeugs berücksichtigt werden.

Zur Erfassung des Fahrzeugumfeldes können Sensoren unterschiedlicher Art oder Kombinationen verschiedenster Sensoren eingesetzt werden. In dem erfassten Umfeld werden Objekte erkannt und beispielsweise durch Position, Form, Abmessung und Bewegung beschrieben. Erfindungsgemäß wird hier die Form und die Abmessung des Objekts als erster Parameter zur Klassifizierung verwendet. In Weiterbildung ist dann vorgesehen, zusätzlich die Objektsgeschwindigkeit zur Objektklassifizierung zu verwenden. Der Abstand zum Beobachter bestimmt die Güte der Klassifizierung: Aufgrund der Messungenauigkeit und der Auflösung kann ein Objekt in großer Entfernung nicht so gut klassifiziert werden, wie wenn es sich um eine geringe Entfernung handelt. Der Unterschied zwischen der Breite eines kleinen und eines großen PKW beträgt nur wenige dm. Die Messgenauigkeit in ca 50 m in lateraler Richtung liegt ungefähr in diesem Bereich. Die Auflösung spielt da auch eine Rolle. Ist ein Gegenstand beispl. nur 1m entfernt, so repräsentiert ein Bildpixel z.B. 1 × 1 cm, ist das Objekt 50 m entfernt so repräsentiert ein Pixel z.b. 50 x 50 cm. Die Zahlenwerte sind hier des Verständnis wegen gewählt.

Mit Umfeldsensoren wie Radar kann die Objektgeschwindigkeit direkt gemessen werden. Bei anderen Systemen muss die Geschwindigkeit aus mindestens zwei zeitlich versetzten Ortsbestimmungen abgeleitet werden. Die Objektdaten, also die sensorspezifischen Beschreibungen der Objekte, dienen als Eingangsdaten für die Objektklassifizierung. Aufgabe der Klassifizierung ist eine Eingruppierung von Objekten in vorher definierte Klassen. Im Fall der Fahrzeugumfeldwahrnehmung können diese Klassen beispielsweise Lastwagen, Autos, Zweiradfahrer und Fußgänger sein. Auf feinerer Abstufung, die große und kleine Autos oder andere Klassen wie Kombi, Stufenheck-PKW und SUV sind möglich. Jede Klasse weist spezifische Eigenschaften aus, die die charakteristischen Merkmale der eigenen oder Unterschiede zu anderen Klassen beschreiben. Solche Eigenschaften werden in einer Datenbank organisiert. Eigenschaften, die ein Objekt beschreiben können die Abmessungen sein. In Weiterbildung wird dann auch der mögliche Geschwindigkeitsbereich berücksichtigt. Bewegt sich beispielsweise ein Objekt mit einer Geschwindigkeit von 75 Stundenkilometer, so ist es aufgrund dieser Eigenschaft sehr unwahrscheinlich, dass es sich hierbei um einen Fußgänger handelt.

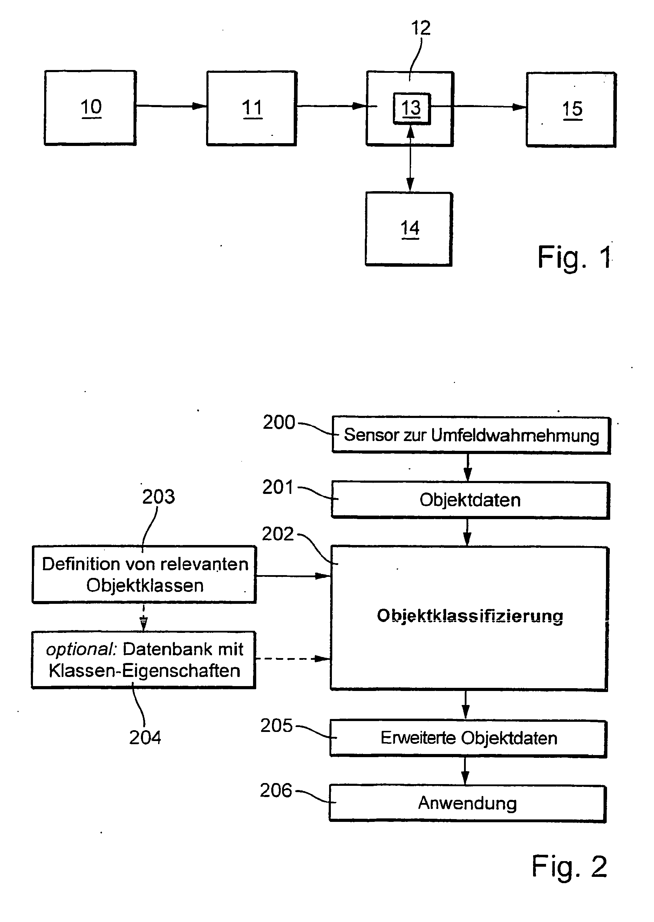

Figur 1 zeigt in einem Blockschaltbild die erfindungsgemäße Vorrichtung. Eine Umfeldsensorik 10 liefert Umfeldsensordaten an eine Signalaufbereitung 11, die die aufbereiteten Signale einem Steuergerät 12 zusendet, das einen Prozessor 13 aufweist, der die Sensordaten verarbeitet und mittels eines Speichers 14, der eine Datenbank sein kann, eine Objektklassifizierung anhand der Sensordaten durchführt. Das Klassifizierungsergebnis überträgt dann das Steuergerät 12 zu anderen Fahrzeugsystemen, wie dem hier beispielhaft dargestellten Fahrzeugsystem 15 beispielsweise einem Rückhaltesystem. Anhand der Objektklassifizierung wird dann das Verhalten des Fahrzeugsystems 15 bestimmt.

Der Prozessor 13 ermittelt aus den Sensordaten die Form und die Abmessungen der einzelnen Objekte. Zusätzlich wird aus den Sensordaten eine Geschwindigkeit für die einzelnen Objekte ermittelt werden Diese kann dann mit einem Geschwindigkeitsbereich verglichen werden. Die Sensorik 10 ist hier eine Videosensorik. Es ist jedoch auch möglich, dass zusätzlich eine Radarsensorik, beispielsweise bei 77 Gigahertz verwendet wird. Für den Nahbereich ist auch eine Ultraschallsensorik zusätzlich möglich.

Mit Hilfe eines Stereovideosensor ermittelt man eine dreidimensionale Punktwolke für ein physikalisches Objekt. Diese Punktwolke wird dann zu einem Objekt im Klassifizierungssystem zusammengefasst (geclustert). Die Punktwolke wird also durch eine umschließende Box (Bounding Box) beschrieben, deren Dimension den Abmessungen der physikalischen Objekte entsprechen. Eine weitere Möglichkeit die Abmessungen zu bestimmen, ist eine Analyse des Bildes. Hier kann man besipielsweise die Kanten des Fahrzeuges bestimmen und mit Hilfe der Orientierung (sofern bekannt) die Dimensionen berechnen.

Figur 2 zeigt in einem Flussdiagram wie ein Objekt klassifiziert wird. Im Verfahrensschritt 200 ermittelt die Sensorik 10 die Objekte im Umfeld. Die Auswertung 11, die die Signale für das Steuergerät 12 aufbereitet, erzeugt dann die Objektdaten, die zum Steuergerät 12 und damit zum Prozessor 13 übertragen werden. Dies geschieht im Verfahrensschritt 201. Der Prozessor 13 führt dann im Verfahrensschritt 202 die Objektklassifizierung durch. Dafür verwendet er vorgegebene abgespeicherte Definitionen von relevanten Objektklassen, also anhand seiner Form, Abmessungen und Geschwindigkeiten, wobei er dabei auch auf eine Datenbank 204 zurückgreifen kann, in der die Klasseneigenschaften abgelegt sind, um anhand der Messergebnisse eindeutige Klassifizierungen durchzuführen.

Die Klassifizierungsergebnisse werden zeitlich gefiltert. So dass, wenn ein Objekt schon 10x als beispielsweise kleiner PKW klassifiziert worden ist und jetzt als entweder kleiner PKW oder vielleicht Fußgänger klassifiziert werden soll (gleiche Eigenschaften in dieser Messung), das Objekt durch die zeitliche Filterung weiterhin als kleiner PKW klassifiziert wird. Des weiteren gibt es eine Verwerfungsklasse. Hier werden alle Objekte eingeordnet, die keiner Klasse zugeordnet werden konnten (weil sie keinen Eigenschaften der Klassen in der Modeldatenbank entsprechen).

Je nach Anwendung kann auch ein nicht eindeutiges Ergebnis ausreichen. Ist besipielsweise ein Objekt entweder als ein großes oder ein kleines Fahrzeug klassifiziert worden und die Anwendung ist auf Fußgängerschutz ausgelegt, so ist diese Mehrdeutigkeit nicht relevant.

Die Objektklassifizierungen werden dann im Verfahrensschritt 205 den Fahrzeugsystemen 15 zugeführt. Im Verfahrensschritt 206 wird dann das Verhalten dieser Fahrzeugsysteme 15 in Abhängigkeit von der Objektklassifizierung beeinflusst.

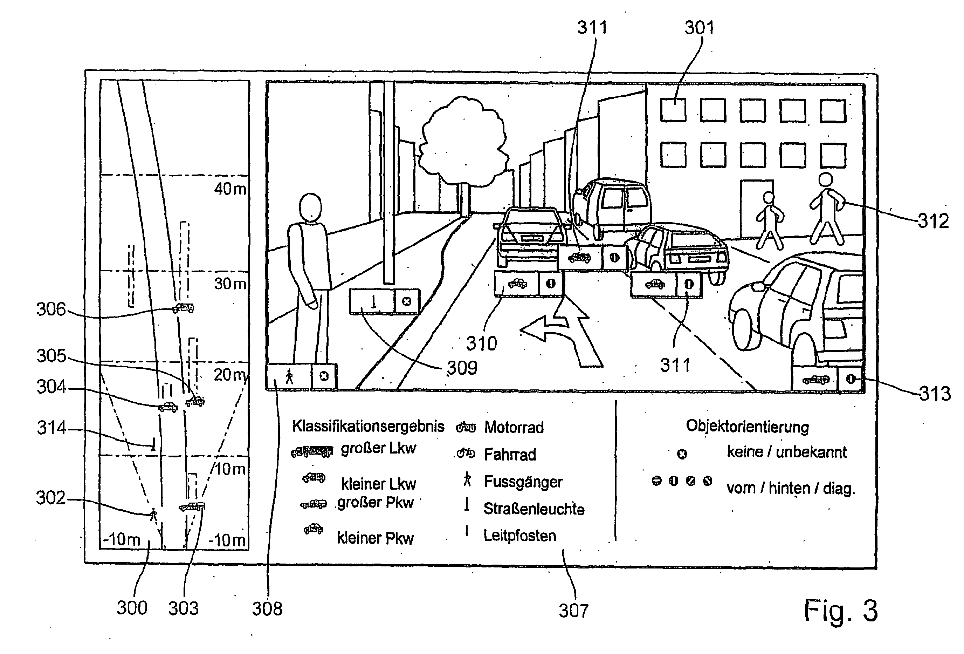

Figur 3 zeigt ein Beispiel für eine Klassifizierung. Im Bild 300 wird eine Aufsicht über einen Korridor gezeigt, der von einem Fahrzeug beobachtet wird. Objekte werden hier mit Klassifikatoren, die schematisch dargestellt sind, klassifiziert. Die Objekte werden durch die Rechtecke erfasst und ihn wird jeweils ein Klassifikator zugeführt. Der Klassifikator 302 zeigt einen Fußgänger. Der Klassifikator 303 zeigt einen großen PKW. Der Klassifikator 314 zeigt den Pfosten einer Straßenleuchte. Der Klassifikator 304 einen kleinen PKW, wie auch der Klassifikator 305, während der Klassifikator 306, der bereits in einem äußeren Beobachtungsbereich ist, einen kleinen LKW darstellt. Daneben kann, wie in der Legende 307 beschrieben ist, auch noch ein Leitpfosten, ein Fahrrad, ein Motorrad und ein großer LKW klassifiziert werden. Das Bild 301 zeigt, wie eine Videokamera im Fahrzeug die Szene beobachtet und klassifiziert. Der Fußgänger am linken Rand des Bildes der mit dem Klassifikator 308 gekennzeichnet wird, weist hier zusätzlich eine Objektorientierung auf, die laut der Legende angibt, dass der Fußgänger 308 keine Orientierung aufweist, wie hier dargestellt ist, steht er auch am Straßenrand. Auch die Straßenleuchte 309 weist dieses Zeichen auf, dass keine Objektorientierung aufweist. Die Klassifizierung 310 zeigt einen PKW, der vor dem Beobachter fährt und eine Orientierung in Frontrichtung aufweist. Auch der LKW 311 daneben weist eine Frontrichtung auf, wie auch der PKW 311 und ein weiterer PKW 313. Andere Objekte sind hier nicht klassifiziert. Die Objektklassifizierung ist auch abhängig vom Abstand.

## Patentansprüche

1. Vorrichtung zur Klassifizierung von wenigstens einem Objekt in einem Fahrzeugumfeld mittels einer Umfeldsensorik (10), wobei die Vorrichtung derart konfiguriert ist, dass die Vorrichtung das wenigstens eine Objekt anhand seiner dreidimensionalen Form und seiner Abmessungen klassifiziert, wobei die Umfeldsensorik (10) die Form und die Abmessungen ermittelt, **dadurch gekennzeichnet, dass** die Vorrichtung die Klassifizierungsergebnisse zeitlich filtert, dass Klassen spezifische Eigenschaften aufweisen, wobei die Eigenschaften charakteristische Merkmale der jeweiligen Klasse oder Unterschiede zu anderen Klassen beschreiben, dass die Eigenschaften in einer Modelldatenbank organisiert werden, wobei es eine Verwerfungsklasse gibt, in die alle Objekte eingeordnet werden, die keinen Eigenschaften der Klassen in der Modelldatenbank entsprechen.

2. Vorrichtung nach Anspruch 1, **dadurch gekennzeichnet, dass** die Vorrichtung zusätzlich eine Geschwindigkeit des wenigstens einen Objekts bei der Klassifizierung gemäß Betrag und/oder Richtung berücksichtigt.

3. Vorrichtung nach Anspruch 1 oder 2, **dadurch gekennzeichnet, dass** die Vorrichtung zusätzlich eine Orientierung des wenigstens einen Objekts bei der Klassifizierung berücksichtigt.

4. Vorrichtung nach einem der vorherigen Ansprüche, **dadurch gekennzeichnet, dass** die Vorrichtung anhand von Daten einer Datenbank eine Plausibilitätsprüfung der Klassifizierung durchführt.

5. Vorrichtung nach einem der vorherigen Ansprüche, **dadurch gekennzeichnet, dass** die Vorrichtung mit wenigstens einem Fahrzeugsystem (15) derart gekoppelt ist, dass die Vorrichtung das wenigstens eine Fahrzeugsystem (15) in Abhängigkeit von der Klassifizierung ansteuert.

6. Vorrichtung nach Anspruch 5, **dadurch gekennzeichnet, dass** das Fahrzeugsystem (15) ein Schutzsystem ist.

7. Vorrichtung nach Anspruch 5, **dadurch gekennzeichnet, dass** das Fahrzeugsystem ein Fahrerassistenzsystem ist.

8. Vorrichtung nach einem der vorhergehenden Ansprüche, **dadurch gekennzeichnet, dass** die die Umfeldsensorik (10) eine Stereo-Kamera und/oder eine Mono-Kamera mit einem Bewegungsstereosensor und/oder einen Lidar-Sensor und/oder einen abtastenden Radarsensor aufweist.

## Claims

1. Device for classifying at least one object in the surroundings of a vehicle by means of a surroundings sensor system (10), wherein the device is configured in such a way that the device classifies the at least one object by reference to its three-dimensional shape and its dimensions, wherein the surroundings sensor system (10) determines the shape and the dimensions, **characterized in that** the device performs chronological filtering on the results of the classification, **in that** classes have specific properties, wherein the properties describe characteristic features of the respective class or differences from other classes, and **in that** the properties are organized in a model database, wherein there is a rejection class into which all the objects which do not correspond to properties of the classes in the model database are classified.

2. Device according to Claim 1, **characterized in that** the device additionally takes into account a speed of the at least one object in the classification, in terms of the absolute value and/or direction.

3. Device according to Claim 1 or 2, **characterized in that** the device additionally takes into account an orientation of the at least one object in the classification.

4. Device according to one of the preceding claims, **characterized in that** the device carries out plausibility checking of the classification by reference to data from a database.

5. Device according to the one of the preceding claims, **characterized in that** the device is coupled to at least one vehicle system (15) in such a way that the device actuates the at least one vehicle system (15) as a function of the classification.

6. Device according to Claim 5, **characterized in that** the vehicle system (15) is a protection system.

7. Device according to Claim 5, **characterized in that** the vehicle system is a driver assistance system.

8. Device according to one of the preceding claims, **characterized that** the surroundings sensor system (10) has a stereo camera and/or mono camera with a movement stereo sensor and/or a lidar sensor and/or a scanning radar sensor.

## Revendications

1. Dispositif de classification d'au moins un objet dans l'environnement d'un véhicule à l'aide de capteurs d'environnement (10), le dispositif étant configuré pour qu'il classifie l'au moins un objet par sa forme tridimensionnelle et ses dimensions, les capteurs d'environnement (10) déterminant la forme et les dimensions, **caractérisé en ce que** le dispositif filtre les résultats de la classification en fonction du temps, **en ce que** des classes présentent des propriétés spécifiques, les propriétés décrivant des caractéristiques spéciales de la classe particulière ou des différences par rapport aux autres classes, **en ce que** les propriétés sont organisées dans une banque de données modèle, une classe de rejet étant utilisée pour classer tous les objets qui ne correspondent à aucune propriété des classes dans la banque de données modèle.

2. Dispositif selon la revendication 1, **caractérisé en ce que** le dispositif tient compte en outre de la vitesse de l'au moins un objet pour la classification, la vitesse étant prise en compte en amplitude et/ou en direction.

3. Dispositif selon la revendication 1 ou 2, **caractérisé en ce que** le dispositif tient compte en outre de l'orientation de l'au moins un objet pour la classification.

4. Dispositif selon l'une des revendications précédentes, **caractérisé en ce qu'**à l'aide des données d'une banque de données, le dispositif effectue un contrôle de plausibilité de la classification.

5. Dispositif selon l'une des revendications précédentes, **caractérisé en ce que** le dispositif est couplé à au moins un système (15) du véhicule de façon à commander l'au moins un système (15) du véhicule en fonction de la classification.

6. Dispositif selon la revendication 5, **caractérisé en ce que** le système (15) du véhicule est un système de protection.

7. Dispositif selon la revendication 5, **caractérisé en ce que** le système du véhicule est un système d'assistance du conducteur.

8. Dispositif selon l'une quelconque des revendications précédentes, **caractérisé en ce que** les capteurs d'environnement (10) comprennent une caméra stéréo et/ou une caméra mono avec un capteur stéréo de mouvements et/ou un capteur Lidar et/ou un capteur radar de balayage.
